# FASCICULE DE BREVET EUROPEEN

(11) **EP 3 345 113 B1**
(45) Date de publication et mention de la délivrance du brevet: **10.06.2020**
(21) Numéro de dépôt: 16770897.3
(22) Date de dépôt: 05.09.2016
(51) Int. Cl.: G06F 21/32, G06F 21/31

(54) **PROCÉDÉ D'AUTORISATION D'UNE ACTION PAR UNE AUTHENTIFICATION INTERACTIVE ET INTUITIVE D'UN UTILISATEUR ET DISPOSITIF ASSOCIÉ**
VERFAHREN ZUR AUTORISIERUNG EINER AKTION DURCH INTERAKTIVE UND INTUITIVE AUTHENTIFIZIERUNG EINES BENUTZERS UND ZUGEHÖRIGE VORRICHTUNG
METHOD FOR AUTHORISING AN ACTION BY INTERACTIVE AND INTUITIVE AUTHENTICATION OF A USER AND ASSOCIATED DEVICE

(30) Priorité: 04.09.2015 FR 1558227
(43) Date de publication de la demande: 11.07.2018
(73) Titulaire: Worldline, 95870 Bezons (FR)
(72) Inventeur: LEFEBVRE, Guillaume, 62410 Meurchin (FR); PERON, Maxime, 59810 Lesquin (FR); BARTHELEMY, Mathieu, 38200 Vienne (FR); FAIVRE, Denis, 59000 Lille (FR)
(74) Mandataire: Debay, Damien
(86) Numéro de dépôt international: PCT/EP2016/070802
(87) Numéro de publication internationale: WO 2017/037275

(56) Documents cités:
- WO-A1-2007/072238
- WO-A1-2007/128110
- US-A1- 2010 115 610
- US-A1- 2013 288 647
- US-A1- 2015 007 290
- US-A1- 2015 007 290

## Description

### DOMAINE TECHNIQUE DE L'INVENTION

La présente invention concerne de manière générale le domaine des procédés d'autorisation d'une action par une authentification interactive et intuitive, destinés par exemple, aux enfants ou aux personnes n'ayant pas la capacité à mémoriser un code.

Elle concerne également tout dispositif employant un tel procédé et plus particulièrement une tirelire.

### ETAT DE LA TECHNIQUE ANTERIEURE

Il est connu que les procédés d'autorisation d'une action par une authentification utilisent généralement un nom d'utilisateur ou login et un mot de passe.

Cependant, ces systèmes ne sont pas particulièrement adaptés à tous les individus et notamment pas aux enfants. En effet, généralement les enfants n'utilisent jamais des mots de passe générés aléatoirement. Leurs mots de passe sont donc facilement devinables. En outre, ils partagent le plus souvent leurs mots de passe avec des amis ou la famille, ce qui décroit la sécurité fournie par ce genre de systèmes.

Il existe donc un besoin pour un système d'authentification qui ne demande pas l'utilisation du couple nom d'utilisateur / un mot de passe, tout en étant simple et intuitif d'utilisation par exemple pour un enfant.

La demande de brevet US 2010/0115610 dévoile un procédé d'authentification d'un utilisateur se basant sur des données biométriques comportementales associées en particulier à la saisie sur un clavier. Un tel procédé permet d'augmenter drastiquement la sécurité des systèmes utilisant le couple nom d'utilisateur / mot de passe.

Cependant, de tels procédés ne sont pas adaptés à des enfants en bas âge. En effet, ces procédés sont étudiés pour des adultes et ne sont en aucun cas intuitif.

La demande de brevet US 2007/0261109 divulgue un système d'authentification s'appliquant sur un écran d'ordinateur et ne nécessitant pas un couple nom d'utilisateur / mot de passe. En effet, le système d'authentification utilise un questionnaire à choix multiple sous la forme d'une histoire et dont le choix effectué parmi les possibilités de réponse permet d'identifier l'utilisateur.

La demande de brevet US2007/0277224 divulgue également, un système alternatif qui se caractérise par une identification par le choix d'une image parmi une multitude.

Ces deux systèmes sont ludiques et intuitifs, cependant, ils ne sont pas adaptés aux dispositifs dépourvus d'un écran ou lorsque l'utilisateur ne peut pas lire.

Une autre possibilité pour identifier un individu est d'utiliser ses données biométriques telles que ses empreintes digitales, la reconnaissance de sa voix, de son iris ou de son réseau veineux.

Cependant, pour que ce type de technologies soit performant, son coût est généralement très important. D'autant plus que ces technologies ne sont généralement pas étudiées pour être utilisées par des individus dont les caractéristiques peuvent évoluer dans le temps. La demande de brevet US2015/0007290 A1 divulgue un procédé d'authentification d'un utilisateur qui détermine un niveau de sécurité d'authentification basé sur le type d'une demande d'utilisateur et effectue une authentification par défi-réponse à l'aide de données biométriques.

La demande de brevet US2013/0288647A1 décrit un procédé d'authentification d'un utilisateur qui utilise des données d'authentification comportementale et qui utilise une pluralité de capteurs pour obtenir les données d'authentification comportementale.

### EXPOSE DE L'INVENTION

La présente invention a donc, pour objet de proposer un procédé d'autorisation d'une action par une authentification interactive et intuitive d'un utilisateur, permettant de palier au moins une partie des inconvénients de l'art antérieur.

Un tel procédé est destiné à un dispositif comprenant au moins une série de capteurs de données biométriques comportementales et une série d'émetteurs dont au moins un émetteur est différent d'un écran, un moyen de traitement, une mémoire et un moyen de sortie d'information, ledit procédé comprend au moins :
- une étape de demande de réalisation d'une action au moyen de traitement,
- une étape de vérification du niveau d'authentification nécessaire de l'utilisateur pour la réalisation de ladite action par le moyen de traitement,
- une étape d'ajustement du niveau d'authentification de l'utilisateur lorsque le niveau d'authentification est insuffisant pour la réalisation de ladite action,
- une étape d'autorisation de ladite action par le moyen de traitement, caractérisé en ce que ladite étape d'ajustement du niveau d'authentification de l'utilisateur est réalisée au sein du dispositif et comprend les sous étapes suivantes :
   - une étape d'émission d'au moins une séquence aléatoire ou non d'au moins deux stimuli par au moins un émetteur à destination de l'utilisateur,
   - une étape de captation de données biométriques comportementales des réactions de l'utilisateur auxdits stimuli émis lors de l'étape d'émission par enregistrement du ou des capteurs actionnés et de la nature de l'action effectuée sur le capteur fournie par le signal reçu,
   - une étape de validation de la réponse de l'utilisateur lors de l'étape de captation de données biométrique comportementales effectuée par ledit moyen de traitement en comparant ladite réaction effectuée par l'utilisateur en fonction de la réponse, aux stimuli, préalablement enregistrée dans la mémoire, une réponse attendue définie par une étape de conditionnement ou d'apprentissage permettant de valider l'authentification de l'utilisateur,

Par « biométrie comportementale » on entend toute donnée biométrique basée sur la reconnaissance d'un trait comportemental, appris et acquis au fil du temps, plutôt que celle d'une caractéristique physiologique. En particulier, la biométrie comportementale est basée sur des mesures et des données relatives à une action d'une personne. Elle permet, par exemple d'identifier un utilisateur par sa façon de se déplacer, d'interagir avec son environnement face à une situation récurrente, à sa façon de tenir un stylo lorsqu'il signe un document ou sa façon de frapper sur un clavier.

Ainsi, grâce à un tel procédé, un enfant peut être formellement authentifié sans avoir un mot de passe à retenir. En outre, l'enfant a l'impression de jouer lorsqu'il s'enrôle et s'authentifie, permettant de rendre ainsi le procédé d'authentification ludique, interactif et intuitif.

Selon une autre particularité, le procédé comprend au moins une étape préalable de conditionnement ou d'apprentissage dudit dispositif par mémorisation de ou des réponse(s) attendue(s), dans laquelle :
- au moins un émetteur, produit individuellement chaque stimulus unique et distinctif composant ladite séquence de stimuli à destination de l'utilisateur,
- l'utilisateur répond à chaque stimulus unique et distinctif par une réaction choisie parmi des actions associées à une biométrie comportementale de l'utilisateur détectable par ledit au moins un capteur,
- la mise en mémoire de la réaction exercée par l'utilisateur en réponse à chaque stimulus unique et distinctif dans la mémoire,
- l'avertissement de l'utilisateur du succès de la mise en mémoire de sa réaction biométrique comportementale associé à un stimulus unique et distinctif, par le moyen de sortie d'information.

Selon une autre particularité, le nombre de stimuli, émis dans la séquence aléatoire ou non, est lié au niveau d'authentification souhaité.

Selon une autre particularité, chacun des stimuli uniques et distinctifs composant ladite séquence est produit par un émetteur de son, de lumière, d'images, de vibrations ou d'odeurs provoquant respectivement une perception de nature visuelle, auditive et/ou tactile de la part de l'utilisateur.

Selon une autre particularité, chacune desdites actions associées à une biométrie comportementale, en réponse à un stimulus unique et distinctif, est de nature sonore, tactile et/ou gestuelle.

Selon une autre particularité, lors de l'étape préalable de conditionnement, lorsque l'utilisateur répond à un stimulus unique et distinctif, sa réaction biométrique comportementale est comparée par le moyen de traitement avec les réactions préalablement mises en mémoire, si cette réaction est identique à l'une des réactions préalablement mise en mémoire, l'utilisateur est alors invité à réitérer une nouvelle réponse, au stimulus unique et distinctif, différente de celle donnée antérieurement.

Un autre objet de la présente demande, est un dispositif électronique comprenant au moins une série de capteurs de données biométriaues comportementales et une série d'émetteurs dont au moins un émetteur est différent d'un écran, une mémoire et un moyen de sortie d'information caractérisé en ce que le moyen de traitement est composé d'au moins d'un micro-processeur et d'un programme associé permettant de mettre en œuvre le procédé d'autorisation d'une action par une authentification interactive et intuitive d'un utilisateur selon l'invention.

De préférence ledit dispositif électronique est une tirelire, plus avantageusement une tirelire connectée.

Selon une autre particularité, au moins un émetteur est un moyen vibrant, une lumière colorée, une sirène, un haut-parleur, un élément articulé, un diffuseur d'odeurs ou une combinaison de ceux-ci.

Selon une autre particularité, au moins un capteur est un interrupteur, un accéléromètre, un gyromètre, un microphone, une caméra, un détecteur de mouvement, une zone tactile ou une combinaison de ceux-ci.

Selon une autre particularité, la tirelire a une forme d'animal comportant au moins un élément articulé parmi les éléments suivants : pattes, tête, groin ou trompe ou truffe, gueule ou museau, queue, et oreilles, ledit au moins un élément articulé étant muni d'au moins un capteur de déplacement de l'élément articulé disposés dans ou à proximité de l'articulation pour délivrer un signal interprétable par le logiciel de reconnaissance par biométrie comportementale et/ou déclenchant un autre stimulus.

Selon une autre particularité, la tirelire comprend sur au moins un flan et/ou son dos au moins un capteur tactile.

De préférence, un tel moyen de communication bidirectionnel est sans fil, par exemple de type WIFI, Bluetooth, NFC, radio, cellulaire, LiFi, infrarouge.

De préférence, le moyen de traitement autorise la transmission des informations par le moyen de communication uniquement lorsque le niveau d'authentification de l'utilisateur est suffisant.

Selon une autre particularité, le moyen de traitement autorise l'exécution d'une action en fonction du niveau d'authentification de l'utilisateur et de l'âge de l'utilisateur.

Ainsi, une telle tirelire selon l'invention est un moyen éducatif évolutif avec l'âge, permettant d'enseigner la gestion de l'argent de manière ludique et interactif.

### BREVE DESCRIPTION DES FIGURES

D'autres caractéristiques, détails et avantages de l'invention ressortiront à la lecture de la description qui suit en référence aux figures annexées, qui illustre :
- la figure 1, représente un logigramme d'un procédé d'autorisation d'une action par une authentification interactive et intuitive d'un utilisateur selon l'invention,
- la figure 2, représente un logigramme détaillé des étapes d'authentification utilisé par le procédé d'autorisation d'une action par une authentification interactive et intuitive d'un utilisateur selon l'invention selon l'invention,
- la figure 3, représente une tirelire selon l'invention.

### DESCRIPTION DETAILLEE DE DIFFERENTS MODES DE REALISATION DE L'INVENTION

De manière générale, le procédé selon l'invention est appliqué par un dispositif électronique comprenant au moins une série de capteurs de données biométriques comportementales et une série d'émetteurs dont au moins un émetteur est différent d'un écran, un moyen de traitement, et une mémoire. Ledit moyen de traitement est composé d'au moins un micro-processeur et d'un programme associé permettant de mettre en œuvre le procédé d'autorisation d'une d'une action par une authentification interactive et intuitive d'un utilisateur selon l'invention.

Le procédé d'autorisation d'une action par une authentification interactive et intuitive d'un utilisateur se base sur les données biométriques comportementales de l'utilisateur. En effet, l'utilisation de telles données permet une interaction plus grande avec l'utilisateur et convient très bien par exemple aux enfants ou a toutes les personne n'ayant pas la capacité d'utilisé un couple nom d'utilisateur / mot de passe. En particulier, ledit procédé utilise des données biométriques comportementales, par exemple d'un enfant, acquise en réponse à des stimuli sonores, visuels ou tactiles.

Plus particulièrement, les étapes d'authentification se réalisent sous la forme de défis permettant ainsi d'obtenir un procédé interactif et intuitif adapté aux enfants.

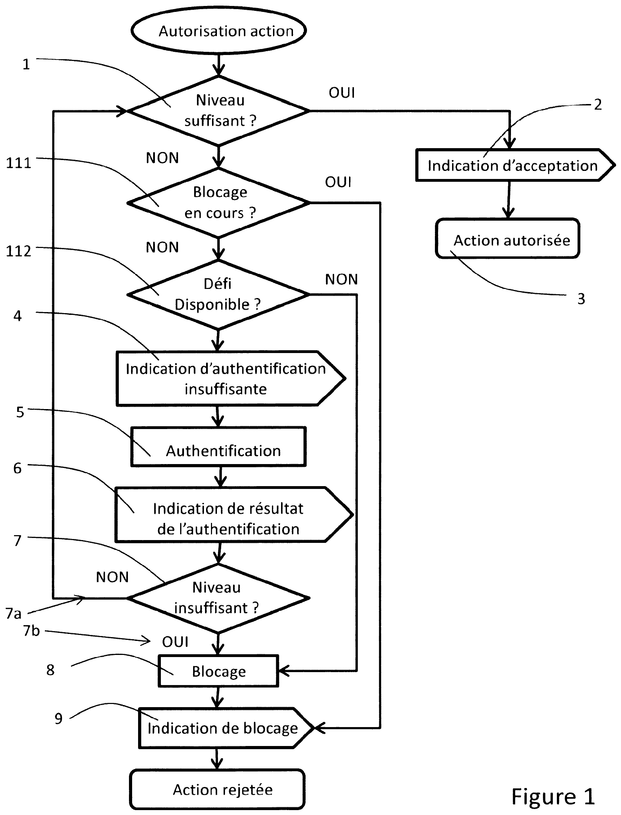

Ainsi, comme illustré sur la figure 1, un procédé d'autorisation d'une action par une authentification interactive et intuitive d'un utilisateur selon l'invention peut comprendre une première étape (1) dans laquelle le programme détermine si l'action souhaitée et sélectionnée par l'utilisateur sur une interface du dispositif électronique requière une authentification de celui-ci.

Pour ce faire, le moyen de traitement va consulter une table ou un fichier dans la mémoire afin de déterminer, par référencement, quel est le niveau d'authentification correspondant à l'action pour autoriser ladite action.

Si le niveau actuel d'authentification (appelé également score) de l'utilisateur est égal ou supérieur au niveau requis, le moyen de traitement informe l'utilisateur par une indication (visuelle, audio ou tactile) de l'acceptation de sa requête d'action (2) et autorise ladite action (3).

Si le niveau actuel d'authentification enregistré pour l'utilisateur est inférieur au niveau requis le moyen de traitement informe l'utilisateur (4) et l'invite à s'authentifier (5) en générant une autre indication (visuelle, audio ou tactile).

A l'issue de l'étape d'authentification (5), l'utilisateur est informé par le dispositif du résultat (6), le moyen de traitement compare alors le nouveau score de l'utilisateur au niveau requis (7) :
- Si l'authentification de l'utilisateur est réussie (7a), le niveau d'authentification de l'utilisateur ou score est augmenté et enregistré afin d'être égal ou supérieur au niveau requis pour la réalisation de ladite action, le moyen de traitement autorise alors ladite action (2 et 3).
- Si l'authentification n'est pas positive, le niveau d'authentification ou score de l'utilisateur reste insuffisant pour la réalisation de l'action (7b). Le moyen de traitement va alors bloquer l'action (8) et en informer l'utilisateur (9) par une commande générant une indication (visuelle, audio ou tactile).

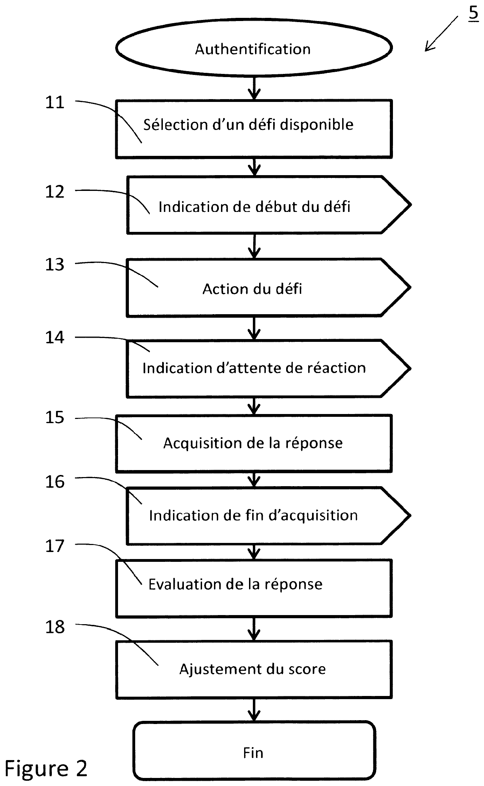

L'étape d'authentification (5) de l'utilisateur comprend les sous-étapes suivantes illustrée par la figure 2 :
- la sélection aléatoire d'un défi par le moyen de traitement dans la mémoire (11), c'est-à-dire d'une séquence de stimuli associée à un niveau égal ou supérieur au niveau d'authentification requis pour autoriser l'action. En d'autres termes, ladite séquence de stimuli est composée d'un nombre de stimulus unique et distinctif correspondant au moins au niveau d'authentification requis pour autoriser l'action.
- l'envoi par le moyen de traitement, d'une commande générant une indication (visuelle, audio ou tactile), du début du défi (12), à l'utilisateur.
- l'émission par au moins un émetteur du défi, c'est-à-dire d'une séquence de stimuli correspondant au niveau d'authentification requis (13) de l'action.
- l'envoi par le moyen de traitement, d'une commande générant une indication (visuelle, audio ou tactile), de l'attente de la réponse de l'utilisateur à la séquence de stimuli du défi (14).
- l'acquisition par au moins un capteur de chaque réaction de l'utilisateur pour chaque stimulus unique et distinctif composant ladite séquence et son enregistrement par le moyen de traitement dans la mémoire pour traitement (15).
- l'envoi par le moyen de traitement, d'une commande générant une indication (visuelle, audio ou tactile), de la fin de l'acquisition de la réponse de l'utilisateur (16).
- l'évaluation par le moyen de traitement de la réponse enregistrée par comparaison avec une réponse attendue à la séquence de stimuli, cette réponse attendue ayant été définie et mémorisée lors d'une étape préalable de conditionnement ou d'apprentissage du dispositif.
- l'ajustement du score de l'utilisateur en fonction du résultat de l'évaluation :
   ∘ si l'évaluation est positive, le niveau d'authentification est incrémenté puis enregistré par le moyen de traitement pour au moins atteindre le niveau correspondant au défi relevé et permettant ainsi à l'utilisateur d'obtenir un niveau égal ou supérieur au niveau d'authentification requis pour autoriser l'action.
   ∘ si l'évaluation est négative, le niveau d'authentification peut alors rester inchangé ou se voir diminuer et enregistré par le moyen de traitement.

Dans une réalisation alternative non illustrée, l'étape d'authentification peut comprendre un défi dit général sous la forme d'une succession ou réitération de sous-défis devant être complétés afin de finir le défi général. Chaque sous-défi est alors composé de l'émission un seul stimulus unique et distinctif. Le nombre de sous-défis étant déterminé par le niveau d'authentification requis pour effectuer l'action.

Quelle que soit l'étape d'authentification utilisée dans le procédé selon l'invention, afin de s'authentifier, l'utilisateur doit avoir préalablement paramétré le dispositif électronique lors d'une étape de conditionnement ou d'apprentissage afin que la mémoire enregistre les données biométriques comportementales de l'utilisateur.

C'est uniquement, une fois le conditionnement dudit dispositif électronique effectué par l'utilisateur, que celui-ci est alors à même de pouvoir authentifier ledit utilisateur.

Pour ce faire, ledit dispositif électronique va émettre par le biais d'au moins un émetteur un stimulus unique et distinctif et pouvant être visuel, sonore, tactile ou une combinaison de ceux-ci.

L'utilisateur répond à audit stimulus par une interaction avec ledit dispositif, cette interaction est détectée par au moins un capteur de biométrie comportementale du dispositif électronique et son signal est enregistré dans la mémoire à l'aide du moyen de traitement. Cette interaction spécifique, audit stimulus produit, correspond à la biométrie comportementale de l'utilisateur vis-à-vis de ce stimulus spécifique. Le au moins un capteur n'enregistre aucune donnée de biométrie physiologique de l'utilisateur en réponse audit stimulus.

Ces étapes sont répétées autant de fois que nécessaire afin d'associer à tous les stimuli, pouvant être émis par ledit dispositif électronique, une interaction spécifique caractérisant une biométrie comportementale de l'utilisateur vis-à-vis d'un stimulus unique et distinctif et de sa mise en mémoire dans la mémoire.

Enfin, il est préférable que le dispositif électronique informe, par une indication (visuelle, sonore et/ou haptique) émise par l'intermédiaire d'une commande générée par le moyen de traitement, l'utilisateur du succès de la mise en mémoire de sa réaction biométrique comportementale associé au stimulus unique et distinctif.

Une sous-étape optionnelle peut être implémentée à l'étape de conditionnement ou d'apprentissage du dispositif, durant laquelle le moyen de traitement, compare la réaction biométrique comportementale aux réactions préalablement mises en mémoire, si cette réaction est identique à l'une des réactions préalablement mise en mémoire, l'utilisateur est alors invité à réitérer une nouvelle réponse, au stimulus unique et distinctif, différente de celle donnée antérieurement.

Cette sous-étape évite ainsi que les réponses de l'utilisateur soient identiques quel que soit le stimulus unique et distinctif produit par le dispositif, permettant ainsi de renforcer l'authentification.

Dans un mode de réalisation alternatif, des étapes optionnelles peuvent être présentes, entre les différentes étapes listées ci-dessus.

Par exemple, une étape peut être incluse entre les étapes (1) et (4) pour déterminer s'il existe un blocage préalable de l'action car le niveau d'authentification requis ne peut être atteint par l'utilisateur. Ceci peut être causé par :
- une restriction temporaire ou permanente de l'action souhaitée (111),
- l'absence d'un défi validant le niveau d'authentification nécessaire (112).

Dans un autre mode de réalisation, la modification du niveau d'authentification peut être associée à d'autres paramètres tels que l'âge, la taille, le poids, un code PIN, une donnée biométrique non comportementale telle que l'empreinte digitale, la voix, l'iris ou le réseau veineux.

Dans un autre mode de réalisation, le niveau d'authentification de l'utilisateur diminue lorsque le défi n'est pas validé.

Dans un autre mode de réalisation, le niveau d'authentification de l'utilisateur diminue automatiquement après une période d'inactivité.

Dans un autre mode de réalisation, lorsque le niveau d'authentification est trop faible, il y a alors un blocage temporaire du dispositif.

Dans un autre mode de réalisation, l'utilisateur est informé des différentes étapes par un moyen d'affichage ou un moyen sonore.

Dans un autre mode de réalisation, une action, nécessitant un haut ou très haut niveau d'authentification, est effectuée uniquement lorsque le niveau d'authentification requis est atteint en combinaison avec une confirmation sur un autre dispositif électronique.

Dans un autre mode de réalisation, le procédé exécuté par le moyen de traitement permet l'utilisation d'une pondération dans le choix des défis utilisés, cette pondération privilégiant ou défavorisant certains défis, de façon à adapter les défis à l'utilisateur, par exemple en fonction de son âge, d'un handicap, etc.

Dans un autre mode de réalisation, le procédé exécuté par le moyen de traitement permet à l'utilisateur, par un menu, de choisir ou personnaliser le défi ou une partie du défi permettant son authentification. Une telle caractéristique permet de renforcer l'authentification, au même titre que la « question personnelle » utilisée dans certains procédés d'authentification sur ordinateur. En effet, non seulement la réponse donnée par l'utilisateur est un trait associé à sa biométrique comportementale, mais le choix du défi ou d'une partie du défi lest également un autre trait associé à sa biométrie comportementale.

Il est bien sur évident pour l'homme du métier de combiner les différents modes de réalisation sans sortir de l'invention. L'homme du métier choisira en fonction des contraintes économiques, ergonomiques, dimensionnelles ou autres qu'il devra respecter.

Un autre objet de la présente invention est un dispositif électronique comprenant au moins une série de capteurs de données biométriques comportementales et une série d'émetteurs dont au moins un émetteur est différent d'un écran, un moyen de traitement, une mémoire et un moyen de sortie d'information, dont ledit moyen de traitement est composé d'au moins d'un micro-processeur et d'un programme associé permettant de mettre en œuvre le procédé d'autorisation d'une action par une authentification interactive et intuitive d'un utilisateur selon l'invention. De préférence, le moyen de sortie d'information est une ou plusieurs diodes lumineuses, haut parleur ou écran. Lorsque le moyen de sortie d'information est un écran celui-ci n'est pas utilisé comme émetteur si le dispositif émet une séquence aléatoire ou non d'au moins deux stimuli par uniquement un émetteur à destination de l'utilisateur. En d'autre terme, si uniquement un unique émetteur sur la série d'émetteurs que comprend le dispositif, est utilisé, afin de produire la séquence aléatoire ou non d'au moins deux stimuli, alors l'écran de la sortie d'information ne sera pas utilisé. séquence aléatoire ou non d'au moins deux stimuli, alors l'écran de la sortie d'information ne sera pas utilisé.

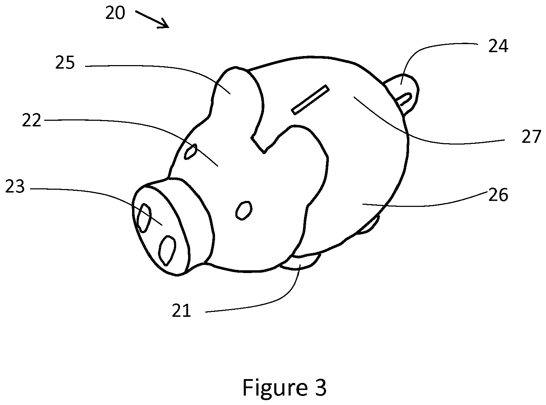

En particulier, comme le montre la figure 3, un tel dispositif peut être une tirelire (20), en particulier une tirelire connectée, plus particulièrement à destination d'un ou plusieurs enfant(s).

En effet, l'utilisation du procédé d'autorisation d'une action par une authentification interactive et intuitive selon l'invention, est particulièrement adapté à une tirelire et plus particulièrement lorsque celle-ci est connectée à un compte bancaire dans une banque par l'intermédiaire d'un moyen de communication bidirectionnel.

A titre d'exemple, le procédé selon l'invention peut autoriser au moins les actions suivantes après authentification selon le procédé :
- Ajout d'argent liquide
- Ajout d'argent par virement ou paiement en ligne
- Consultation du solde local (dans la tirelire)
- Consultation du solde du compte bancaire
- Retrait d'argent de la tirelire
- Virement du compte bancaire vers un autre compte.

Bien sûr, la liste ci-dessus est donnée à titre d'exemple et ne peut être considérée comme limitative.

Chacune de ces actions peuvent avoir des niveaux d'authentification identiques dans certains modes de réalisation, mais on pourra aussi préférer des niveaux d'authentification proportionnels à l'importance de l'action.

A titre d'exemple :
- Ajout d'argent liquide : niveau d'authentification nécessaire nul ou très faible par exemple une séquence comprenant 1 ou 2 stimuli (score) ;
- Ajout d'argent par virement : niveau d'authentification nécessaire nul ou très faible par exemple une séquence comprenant 1 ou 2 stimuli (score) ;
- Consultation du solde local (dans la tirelire) : niveau d'authentification nécessaire faible par exemple une séquence comprenant 2 à 4 stimuli (score) ;
- Consultation du solde du compte bancaire : niveau d'authentification nécessaire moyen par exemple une séquence comprenant 4 à 6 stimuli (score) ;
- Retrait d'argent de la tirelire : niveau d'authentification nécessaire élevé par exemple une séquence comprenant 6 à 10 stimuli (score) ;
- Virement du compte bancaire vers un autre compte : niveau d'authentification nécessaire très élevé par exemple une séquence comprenant plus de 10 stimuli (score).

Pour ce faire, ladite tirelire comprend une série d'émetteurs et de capteurs sur son corps.

A titre d'exemple purement illustratif et non limitatif :
- un émetteur peut être un moyen vibrant, une lumière colorée, une sirène, un haut-parleur, un élément articulé, un diffuseur d'odeurs ou une combinaison de ceux-ci.
- un capteur est un interrupteur, un accéléromètre, un gyromètre, un potentiomètre, un microphone, une caméra, un détecteur de mouvement, une zone tactile ou une combinaison de ces différents éléments.

Ainsi lorsque le procédé de l'invention est mis en œuvre par la tirelire, chaque stimulus unique et distinctif de la séquence peut être, un mouvement d'une partie de la tirelire, une tonalité ou une séquence sonore, une vibration ou séquence de vibration, l'illumination d'une partie ou de la totalité de la tirelire ou une séquence d'illumination. La couleur de l'illumination pouvant être monochrome ou changeante.

Les réponses faites par l'utilisateur ou des informations associées aux réponses de l'utilisateur à la suite d'un stimulus sont associées à un fichier dit de biométrie comportementale de l'utilisateur. Ces informations peuvent représenter, par exemple, un mouvement de l'utilisateur capté par une caméra ou l'activation d'un interrupteur sur le corps de la tirelire ou un élément articulé/mobile de la tirelire ou un son, un mot ou une phrase capté par le microphone ou le déplacement de la tirelire par l'utilisateur enregistré par l'accéléromètre et/ou le gyromètre ou le contact entre l'utilisateur et la tirelire suivi par la zone tactile. Il faut comprendre le terme fichier de biométrie comportementale au sens large en enregistrant non seulement le type de réponse aux stimuli, mais aussi éventuellement l'acquisition de grandeurs continues telles que, par exemple, le délai entre deux actions, sur un bouton poussoir ou concernant le son de la voix ou pour réaliser un geste sur une zone tactile ou pour réaliser un mouvement sur un bouton rotatif...

Ainsi, à titre d'exemple, si lors du conditionnement de la tirelire, l'utilisateur dit « POLO » en réponse au stimulus sonore « MARCO », ou encore soulève la tirelire en réponse à une illumination de couleur rouge, ses réponses associées à la biométrie comportementale de l'utilisateur sont attendues lors des défis utilisant les stimuli sonore « MARCO » et une illumination de couleur rouge afin de valider les défis et d'augmenter le score de l'utilisateur pour d'autoriser l'action souhaitée.

Bien entendu, il est possible d'enregistrer pour un seul stimulus une réponse complexe comprenant une biométrie comportementale captée par plusieurs capteurs simultanément. Par exemple, lorsque le stimulus est une illumination rouge, la réponse de l'utilisateur enregistrée est un déplacement de la tirelire vers le haut avec deux points de pression sur la zone tactile située sur la surface supérieure de la tirelire. Un tel mode de réalisation permet de renforcer drastiquement l'authentification de l'utilisateur.

Étant donné que la tirelire selon l'invention est à destination des enfants, la forme de la tirelire sera de préférence en forme d'animal, facilitant ainsi l'interaction ludique avec l'enfant.

En effet, une telle forme permet de positionner un ou plusieurs élément(s) articulé(s) parmi une ou des parties du corps de l'animal tel que les pattes (21), la tête (22), le groin (23) ou la truffe ou la trompe, la gueule ou le museau, la queue (24) et les oreilles (25).

Ces éléments articulés, pouvant être munis d'au moins un capteur de déplacement de l'élément articulé, disposés dans ou à proximité de l'articulation, afin de délivrer un signal interprétable par le logiciel de reconnaissance par biométrie comportementale lorsque l'utilisateur le manipule en réponse à un stimulus.

De même, lorsque la forme de la tirelire est un animal, la position d'une éventuelle zone tactile est de préférence sur les flancs (26) et/ou le dos (27) de l'animal.

Par ailleurs, lorsque la tirelire est une tirelire connectée, c'est-à-dire quelle est liée à un compte bancaire, la tirelire comprend en outre un moyen de communication bidirectionnel avec un serveur d'une banque qui détient le compte bancaire de l'utilisateur et/ou une application mobile.

Dans ce mode de réalisation particulier, les actions nécessitant un niveau d'authentification élevé ou très élevé peuvent nécessiter une confirmation par le serveur ou l'application mobile exécutée sur un téléphone permettant ainsi une meilleure sécurisation et un contrôle notamment parental plus important.

Dans un autre mode de réalisation, la tirelire peut avoir des fonctionnalités évolutives, actionnables par un serveur ou un contrôleur tel qu'une tablette ou un téléphone mobile, en fonction de l'utilisateur. C'est-à-dire que des fonctions et donc des autorisations d'action seront disponibles pour traitement par le procédé d'authentification en fonction de l'âge de l'utilisateur ou d'un moyen de contrôle additionnel, par exemple parental. A titre d'exemple, jusqu'à 3 ans seule l'introduction d'argent est disponible, de 3 à 7 ans la consultation du solde devient disponible, à partir de 9 ans des transferts avec un compte bancaire deviennent disponibles ainsi que vers un moyen de micro payement/porte-monnaie électronique, etc.

Par ailleurs, dans certains modes de réalisation, la présence d'une liaison avec un serveur ou un contrôleur permet par l'envoi de commandes adaptées de mettre à jour régulièrement la tirelire par l'intermédiaire du moyen de communication.

De telles mises à jour peuvent permettre la réception de séquences de code permettant :
- l'intégration dans le dispositif de nouveaux défis,
- l'élimination de défis qui ne donnent pas les résultats escomptés pour l'authentification (par exemple des défis qui donnent des faux positifs ou des faux négatifs),
- l'ajout ou le déblocage de nouvelles fonctions,
- la modification des niveaux d'authentification nécessaires pour la réalisation d'une action,

De plus, la tirelire selon l'invention peut mettre en œuvre les schémas d'utilisation suivants sous la supervision du procédé selon l'invention:
- Epargne : l'insertion d'une pièce, d'un billet ou d'un chèque bancaire dans la tirelire, la détection de l'argent par un capteur de pièce ou un scanner de billet/chèque, la transmission au serveur de l'information, et son affichage sur une application mobile. Dans un mode alternatif, une confirmation du montant introduit dans la tirelire peut être demandée par le serveur au moyen de l'application mobile.
- Recevoir de l'argent électroniquement : la tirelire envoie à une application détenue par un tiers non utilisateur, les informations permettant d'identifier le compte bancaire associé à l'utilisateur de la tirelire. L'envoi d'information peut se faire par le moyen de communication, de manière directe, par communication sans fil entre la tirelire et une application (par exemple mobile), détenue par un tiers (wifi, NFC, Bluetooth, infrarouge, LiFI), la lecture d'un code QR, ou par l'intermédiaire du serveur de la banque de l'utilisateur. Le tiers fait le transfert, le serveur de la banque transmet l'information à la tirelire, qui la prend en compte et informe l'utilisateur.

Par ailleurs, quel que soit le mode de réalisation, la tirelire selon l'invention, peut avoir :
- un mode jeu dans lequel le moyen de traitement met en œuvre à des fins ludiques, les défis de l'étape d'authentification,
- un mode veilleuse de nuit peut être mis en œuvre par l'activation des émetteurs lumineux,
- un mode fonction baby phone par exemple, en la couplant en transmission avec une application embarquée sur un cellulaire.

On comprendra aisément à la lecture de la présente demande, que les particularités de la présente invention, comme généralement décrits et illustrés dans les figures, puissent être arrangés et conçus selon une grande variété de configurations différentes. Ainsi, la description de la présente invention et les figures afférentes ne sont pas prévues pour limiter la portée de l'invention mais représentent simplement des modes de réalisation choisis.

L'homme de métier comprendra que les caractéristiques techniques d'un mode de réalisation donné, peuvent être combinées avec des caractéristiques d'un autre mode de réalisation à moins que l'inverse soit explicitement mentionné ou qu'il soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine défini par la portée des revendications jointes, ils doivent être considérés à titre d'illustration et l'invention ne doit pas être limitée aux détails donnés ci-dessus.

## Revendications

1. Procédé d'autorisation d'une action par une authentification interactive et intuitive à multi-niveau d'un utilisateur pour un dispositif comprenant au moins une série de capteurs de données biométriques comportementales et une série d'émetteurs dont au moins un émetteur est différent d'un écran, un moyen de traitement, une mémoire et un moyen de sortie d'information, ledit procédé comprend au moins :
a)une étape de demande de réalisation d'une action au moyen de traitement,
b)une étape (1) de vérification du niveau d'authentification nécessaire de l'utilisateur pour la réalisation de ladite action par le moyen de traitement,
c)une étape (4 à 7) d'ajustement du niveau d'authentification de l'utilisateur lorsque le niveau d'authentification est insuffisant pour la réalisation de ladite action,
d)une étape (2 et 3) d'autorisation de ladite action par le moyen de traitement,
**caractérisé en ce que** ladite étape d'ajustement du niveau d'authentification de l'utilisateur est réalisée au sein du dispositif et comprend les sous étapes suivantes :
i) une étape (13) d'émission d'au moins une séquence aléatoire ou non d'au moins deux stimuli par au moins un émetteur à destination de l'utilisateur,
ii) une étape de captation (15) de données biométriques comportementales des réactions de l'utilisateur auxdits stimuli émis lors de l'étape d'émission par enregistrement du ou des capteurs actionnés et de la nature de l'action effectuée sur le capteur fournie par le signal reçu,
iii) une étape de validation (17) de la réponse de l'utilisateur lors de l'étape de captation de données biométrique comportementales effectuée par ledit moyen de traitement en comparant ladite réaction effectuée par l'utilisateur en fonction de la réponse, aux stimuli, préalablement enregistrée dans la mémoire, une réponse attendue définie par une étape de conditionnement ou d'apprentissage permettant de valider l'authentification de l'utilisateur,

2. Procédé d'autorisation d'une action par une authentification interactive et intuitive d'un utilisateur selon la revendication 1, **caractérisé en ce que** ledit procédé comprend au moins une étape préalable de conditionnement ou d'apprentissage dudit dispositif par mémorisation de ou des réponse(s) attendue(s), dans laquelle :
i) au moins un émetteur produit individuellement chaque stimulus unique et distinctif composant ladite séquence de stimuli à destination de l'utilisateur,
ii) l'utilisateur répond à chaque stimulus unique et distinctif par une réaction comportementale détectable par au moins un capteur, cette réaction devant correspondre à une des actions associées à une biométrie comportementale de l'utilisateur,
iii) la mise en mémoire chaque réaction comportementale de l'utilisateur en réponse à chaque stimulus unique et distinctif dans la mémoire,
iv) l'avertissement de l'utilisateur du succès de la mise en mémoire de sa réaction biométrique comportementale associé à un stimulus unique et distinctif, par le moyen de sortie d'information.

3. Procédé d'autorisation d'une action par une authentification interactive et intuitive d'un utilisateur selon l'une des revendications 1 ou 2, **caractérisé en ce que** le nombre de stimuli émis dans la séquence aléatoire ou non, est lié au niveau d'authentification souhaité.

4. Procédé d'autorisation d'une action par une authentification interactive et intuitive d'un utilisateur selon l'une des revendications 1 à 3, **caractérisé en ce que** chacun des stimuli uniques et distinctifs composant ladite séquence est produit par un émetteur de son, de lumière, d'images, ou de vibration provoquant respectivement une perception de nature visuelle, auditive et/ou tactile de la part de l'utilisateur.

5. Procédé d'autorisation d'une action par une authentification interactive et intuitive d'un utilisateur selon l'une des revendications précédentes, **caractérisé en ce que** chacune desdites actions associées à une biométrie comportementale, en réponse à un stimulus unique et distinctif, est de nature sonore, tactile et/ou gestuelle.

6. Procédé d'autorisation d'une action par une authentification interactive et intuitive d'un utilisateur selon la revendication 2 ou l'une des revendication 3 à 5 dépendante de la 2, **caractérisé en ce que** lors de l'étape préalable de conditionnement, lorsque l'utilisateur répond à un stimulus unique et distinctif, sa réaction biométrique comportementale est comparée par le moyen de traitement avec les réactions préalablement mises en mémoire, si cette réaction est identique à l'une des réactions préalablement mise en mémoire, l'utilisateur est alors invité à réitérer une nouvelle réponse, au stimulus unique et distinctif, différente de celle donnée antérieurement.

7. Dispositif électronique comprenant au moins une série de capteurs de données biométriques comportementales et une série d'émetteurs dont au moins un émetteur est différent d'un écran, un moyen de traitement, une mémoire et un moyen de sortie d'information **caractérisé en ce que** le moyen de traitement est composé d'au moins d'un micro-processeur et d'un programme associé permettant de mettre en œuvre le procédé d'autorisation d'une action par une authentification interactive et intuitive d'un utilisateur selon les revendications 1 à 6.

8. Dispositif électronique selon la revendication précédente **caractérisé en ce que** c'est une tirelire (20).

9. Tirelire selon la revendication 8, **caractérisé en ce que** au moins un émetteur est un moyen vibrant, une lumière colorée, une sirène, un haut-parleur, un élément articulé ou une combinaison de ceux-ci.

10. Tirelire selon l'une des revendications 8 à 9, **caractérisé en ce que** au moins un capteur est un interrupteur, un accéléromètre, un gyromètre, un microphone, une caméra, un détecteur de mouvement, une zone tactile ou une combinaison de ceux-ci.

11. Tirelire selon l'une des revendications 8 à 10, **caractérisé en ce qu'**elle a une forme d'animal comportant au moins un élément articulé parmi les éléments suivants: pattes (21), tête (22), groin ou trompe ou truffe(23), gueule ou museau, queue (24), et oreilles(25), ledit au moins un élément articulé étant muni d'au moins un capteur de déplacement de l'élément articulé disposés dans ou à proximité de l'articulation pour délivrer un signal interprétable par le logiciel de reconnaissance par biométrie comportementale et/ou déclenchant un autre stimulus.

12. Tirelire selon la revendication précédente, **caractérisé en ce qu'**elle comprend sur au moins un flan (26) et/ou son dos (27) au moins un capteur tactile.

13. Tirelire selon l'une des revendications 8 à 12, **caractérisé en ce qu'**elle comprend en outre un moyen de communication bidirectionnel avec un serveur d'une banque qui détient un compte bancaire de l'utilisateur et/ou une application mobile.

14. Tirelire selon la revendication précédente, **caractérisé en ce que** le moyen de traitement autorise la transmission des informations par le moyen de communication uniquement lorsque le niveau d'authentification de l'utilisateur est suffisant.

15. Tirelire selon l'une des revendications 13 à 14, **caractérisé en ce que** le moyen de communication bidirectionnel permet la réception de commandes adaptées pour des mises à jour de la tirelire.

16. Tirelire selon la revendication précédente, **caractérisé en ce que** les mises à jour comprennent au moins l'une des actions suivantes :
- l'intégration d'un ou des nouveaux défis,
- l'élimination d'un ou des défis qui ne donnent pas les résultats escomptés pour l'authentification,
- l'ajout ou le déblocage d'une ou des nouvelles fonctions,
- la modification d'un ou des niveaux d'authentification nécessaires pour la réalisation d'une action,

17. Tirelire selon l'une des revendications 8 à 16, **caractérisé en ce que** le moyen de traitement autorise l'exécution d'une action en fonction du niveau d'authentification de l'utilisateur et de l'âge de l'utilisateur.

## Patentansprüche

1. Verfahren zum Autorisieren einer Aktion durch eine interaktive und intuitive mehrstufige Authentifizierung eines Benutzers für eine Vorrichtung, die wenigstens eine Reihe von Sensoren für verhaltensbiometrische Daten und eine Reihe von Emittern umfasst, von denen sich wenigstens ein Emitter von einem Bildschirm, einem Verarbeitungsmittel, einem Speicher und einem Informationsausgabemittel unterscheidet, wobei das Verfahren wenigstens Folgendes beinhaltet:
a) einen Schritt des Anforderns eines Verarbeitungsmittels, eine Aktion durchzuführen,
b) einen Schritt (1) des Verifizierens der zum Durchführen der genannten Aktion mit dem Verarbeitungsmittel nötigen Authentifizierungsstufe des Benutzers,
c) einen Schritt (4 bis 7) des Einstellens der Authentifizierungsstufe des Benutzers, wenn die Authentifizierungsstufe zum Durchführen der genannten Aktion unzureichend ist,
d) einen Schritt (2 und 3) des Autorisierens der genannten Aktion durch das Verarbeitungsmittel,
**dadurch gekennzeichnet, dass** der genannte Schritt des Einstellens der Authentifizierungsstufe des Benutzers im Innern der Vorrichtung erfolgt und die folgenden Teilschritte beinhaltet:
i) einen Schritt (13) des Emittierens wenigstens einer zufälligen oder nicht zufälligen Sequenz von wenigstens zwei Reizen durch wenigstens einen Emitter zu dem Benutzer,
ii) einen Schritt des Erfassens (15) verhaltensbiometrischer Daten der Reaktionen des Benutzers auf die im Emissionsschritt emittierten Reize durch Registrieren der ein oder mehreren betätigten Sensoren und der Natur der an dem durch das empfangene Signal gelieferten Sensor durchgeführten Aktion,
iii) einen Schritt des Validierens (17) der Antwort des Benutzers in dem Schritt des Erfassens von verhaltensbiometrischen Daten, durchgeführt von dem genannten Verarbeitungsmittel, durch Vergleichen der vom Benutzer in Abhängigkeit von der Antwort gegebenen Reaktion auf die Reize, zuvor im Speicher registriert, wobei eine erwartete Antwort durch einen Schritt des Konditionierens oder Lernens definiert wird, so dass die Authentifizierung des Benutzers validiert werden kann.

2. Verfahren zum Autorisieren einer Aktion durch eine interaktive und intuitive Authentifizierung eines Benutzers nach Anspruch 1, **dadurch gekennzeichnet, dass** das genannte Verfahren wenigstens einen Vorabschritt des Konditionierens oder Lernens der Vorrichtung durch Speichern der ein oder mehreren erwarteten Antworten beinhaltet, wobei:
i) wenigstens ein Emitter individuell jeden einzigartigen und unverwechselbaren Reiz produziert, der die Sequenz der Reize für den Benutzer bildet,
ii) der Benutzer auf jeden einzigartigen und unverwechselbaren Reiz mit einer Verhaltensreaktion antwortet, die von wenigstens einem Sensor erkannt werden kann, wobei diese Reaktion einer der mit einer Verhaltensbiometrie des Benutzers assoziierten Reaktion entsprechen muss,
iii) das Speichern jeder Verhaltensreaktion des Benutzers als Reaktion auf jeden einzigartigen und unverwechselbaren Reiz im Speicher erfolgt,
iv) Benachrichtigen des Benutzers über den Erfolg der Speicherung seiner mit einem einzigartigen und unverwechselbaren Reiz assoziierten verhaltensbiometrischen Reaktion durch das Informationsausgabemittel.

3. Verfahren zum Autorisieren einer Aktion durch eine interaktive und intuitive Authentifizierung eines Benutzers nach Anspruch 1 oder 2, **dadurch gekennzeichnet, dass** die Anzahl von in der zufälligen oder nicht zufälligen Sequenz ausgegebenen Reize mit der gewünschten Authentifizierungsstufe verbunden ist.

4. Verfahren zum Autorisieren einer Aktion durch eine interaktive und intuitive Authentifizierung eines Benutzers nach einem der Ansprüche 1 bis 3, **dadurch gekennzeichnet, dass** jeder der die Folge bildenden einzigartigen und unverwechselbaren Reize durch einen Ton-, Licht-, Bild- oder Vibrationsemitter produziert wird, der jeweils eine visuelle, auditive und/oder taktile Wahrnehmung seitens des Benutzers hervorruft.

5. Verfahren zum Autorisieren einer Aktion durch eine interaktive und intuitive Authentifizierung eines Benutzers nach einem der vorherigen Ansprüche, **dadurch gekennzeichnet, dass** jede der mit einer Verhaltensbiometrie assoziierten Aktionen als Reaktion auf einen einzigartigen und unverwechselbaren Reiz von klanglicher, taktiler und/oder gestischer Natur ist.

6. Verfahren zum Autorisieren einer Aktion durch eine interaktive und intuitive Authentifizierung eines Benutzers nach Anspruch 2 oder nach einem der Ansprüche 3 bis 5 in Abhängigkeit von Anspruch 2, **dadurch gekennzeichnet, dass** während des Vorabschritts des Konditionierens, wenn der Benutzer auf einen einzigartigen und unverwechselbaren Reiz antwortet, seine verhaltensbiometrische Reaktion von dem Verarbeitungsmittel mit den gespeicherten Vorabreaktionen verglichen wird und, wenn diese Reaktion mit einer der gespeicherten Vorabreaktionen identisch ist, der Benutzer dann eingeladen wird, eine neue Antwort auf den einzigartigen und unverwechselbaren Reiz zu wiederholen, die sich von der zuvor gegebenen unterscheidet.

7. Elektronisches Gerät, das wenigstens einer Reihe von Sensoren für verhaltensbiometrische Daten und einer Reihe von Emittern umfasst, von denen sich wenigstens ein Emitter von einem Bildschirm, ein Verarbeitungsmittel, einen Speicher und ein Informationsausgabemittel umfasst unterscheidet, **dadurch gekennzeichnet, dass** das Verarbeitungsmittel aus wenigstens einem Mikroprozessor und einem assoziierten Programm besteht, so dass das Verfahren zum Autorisieren einer Aktion durch eine interaktive und intuitive Authentifizierung eines Benutzers nach den Ansprüchen 1 bis 6 durchgeführt werden kann.

8. Elektronisches Gerät nach dem vorherigen Anspruch, **dadurch gekennzeichnet, dass** es eine Spardose (20) ist.

9. Spardose nach Anspruch 8, **dadurch gekennzeichnet, dass** wenigstens ein Emitter ein Vibrationsmittel, ein farbiges Licht, eine Sirene, ein Lautsprecher, ein artikuliertes Element oder eine Kombination davon ist.

10. Spardose nach einem der Ansprüche 8 bis 9, **dadurch gekennzeichnet, dass** wenigstens ein Sensor ein Unterbrecher, ein Beschleunigungsmesser, ein Gyrometer, ein Mikrofon, eine Kamera, ein Bewegungsdetektor, eine taktile Zone oder eine Kombination davon ist.

11. Spardose nach einem der Ansprüche 8 bis 10, **dadurch gekennzeichnet, dass** sie die Form eines Tieres hat, umfassend ein artikuliertes Element aus den folgenden Elementen: Pfoten (21), Kopf (22), Schnauze oder Rüssel oder Trüffel (23), Maul oder Schnauze, Schwanz (24) und Ohren (25), wobei das wenigstens eine artikulierte Element mit wenigstens einem Sensor für Bewegungen des artikulierten Elements ausgestattet ist, angeordnet in oder nahe der Artikulation zum Liefern eines Signals, das von der Erkennungslogik durch Verhaltensbiometrie interpretiert werden kann und/oder einen anderen Reiz auslöst.

12. Spardose nach dem vorherigen Anspruch, **dadurch gekennzeichnet, dass** sie auf wenigstens einer Seite (26) und/oder auf dem Rücken (27) wenigstens einen taktilen Sensor umfasst.

13. Spardose nach einem der Ansprüche 8 bis 12, **dadurch gekennzeichnet, dass** sie ferner ein bidirektionales Kommunikationsmittel mit einem Server einer Bank umfasst, die ein Bankkonto des Benutzers und/oder eine mobile Anwendung führt.

14. Spardose nach dem vorherigen Anspruch, **dadurch gekennzeichnet, dass** das Verarbeitungsmittel die Übertragung von Informationen durch das Kommunikationsmittel nur dann autorisiert, wenn die Authentifizierungsstufe des Benutzers ausreicht.

15. Spardose nach einem der Ansprüche 13 bis 14, **dadurch gekennzeichnet, dass** das bidirektionale Kommunikationsmittel den Empfang von Befehlen zulässt, die für Aktualisierungen der Spardose ausgelegt sind.

16. Spardose nach dem vorherigen Anspruch, **dadurch gekennzeichnet, dass** die Aktualisierungen wenigstens die folgenden Aktionen umfassen:
- Integrieren von einer oder mehreren neuen Herausforderungen,
- Eliminieren von einer oder mehreren Herausforderungen, die nicht die für die Authentifizierung erwarteten Ergebnisse liefern,
- Hinzufügen oder Sperren von einer oder mehreren neuen Funktionen,
- Modifizieren von einer oder mehreren neuen Authentifizierungen, die für die Realisierung einer Aktion notwendig sind.

17. Spardose nach einem der Ansprüche 8 bis 16, **dadurch gekennzeichnet, dass** das Verarbeitungsmittel die Ausführung einer Aktion in Abhängigkeit von der Authentifizierungsstufe des Benutzers und dem Alter des Benutzers autorisiert.

## Claims

1. Method for authorising an action by a multi-level interactive and intuitive authentication of a user for a device comprising at least one series of behavioural biometric data sensors and a series of transmitters of which at least one transmitter is different to a screen, a processing means, a memory and an information output means, said method comprises at least:
a) a step of requesting performance of an action from the processing means,
b) a step (1) of verification of the necessary level of authentication of the user for the performance of said action by the processing means,
c) a step (4 to 7) of adjusting the level of authentication of the user when the level of authentication is insufficient for the performance of said action,
d) a step (2 and 3) of authorisation of said action by the processing means,
**characterised in that** said step of adjusting the level of authentication of the user is performed within the device and comprises the following substeps:
i) a step (13) of transmission of at least one random or non-random sequence of at least two stimuli by at least one transmitter to the user,
ii) a step of sensing (15) of behavioural biometric data of the reactions of the user to said stimuli transmitted during the step of transmission by recording of the sensor or sensors actuated and of the nature of the action carried out on the sensor provided by the signal received,
iii) a step of validation (17) of the response of the user during the step of sensing of behavioural biometric data carried out by said processing means by comparing said reaction carried out by the user as a function of the response, to the stimuli, previously recorded in the memory, wherein an expected response defined by a step of conditioning or learning makes it possible to validate the authentication of the user.

2. Method for authorising an action by an interactive and intuitive authentication of a user according to claim 1, **characterised in that** said method comprises at least one prior step of conditioning or learning of said device by storage of one or more expected responses, in which:
i) at least one transmitter individually produces each single and distinctive stimulus that makes up said sequence of stimuli for the user,
ii) the user responds to each single and distinctive stimulus by a behavioural reaction detectable by at least one sensor, wherein this reaction must correspond to one of the actions associated with behavioural biometrics of the user,
iii) storage of each behavioural reaction of the user in response to each single and distinctive stimulus in the memory,
iv) notification of the user of the success of storage of his or her behavioural biometric reaction associated with a single and distinctive stimulus, by the information output means.

3. Method for authorising an action by an interactive and intuitive authentication of a user according to one of claims 1 or 2, **characterised in that** the number of stimuli transmitted in the random or non-random sequence is connected with the desired level of authentication.

4. Method for authorising an action by an interactive and intuitive authentication of a user according to one of claims 1 to 3, **characterised in that** each of the single and distinctive stimuli that make up said sequence is produced by a transmitter of sound, light, images or vibration causing a perception of a visual, auditory and/or tactile nature respectively on the part of the user.

5. Method for authorising an action by an interactive and intuitive authentication of a user according to one of the preceding claims, **characterised in that** each of said actions associated with behavioural biometrics, in response to a single and distinctive stimulus, is of an acoustic, tactile and/or gestural nature.

6. Method for authorising an action by an interactive and intuitive authentication of a user according to claim 2 or one of claims 3 to 5 dependent on 2, **characterised in that**, during the prior step of conditioning, when the user responds to a single and distinctive stimulus, his or her behavioural biometric reaction is compared by the processing means with the previously stored reactions, and if this reaction is identical with one of the previously stored reactions, the user is then invited to repeat a new response, to the single and distinctive stimulus, different to the one given previously.

7. Electronic device comprising at least one series of behavioural biometric data sensors and a series of transmitters of which at least one transmitter is different to a screen,, a processing means, a memory and an information output means, **characterised in that** the processing means is composed of at least one microprocessor and an associated program making it possible to carry out the method for authorising an action by an interactive and intuitive authentication of a user according to claims 1 to 6.

8. Electronic device according to the preceding claim, **characterised in that** it is a piggy bank (20).

9. Piggy bank according to claim 8, **characterised in that** at least one transmitter is a vibrating means, a coloured light, an alarm, a loudspeaker, a jointed element or a combination thereof.

10. Piggy bank according to one of claims 8 to 9, **characterised in that** at least one sensor is a switch, an accelerometer, a gyrometer, a microphone, a camera, a movement detector, a tactile zone or a combination thereof.

11. Piggy bank according to one of claims 8 to 10, **characterised in that** it is in the form of an animal comprising at least one jointed element among the following elements: feet (21), head (22), snout or trunk or nose (23), mouth or muzzle, tail (24) and ears (25), said at least one jointed element being provided with at least one sensor of displacement of the jointed element disposed in or close to the joint in order to deliver a signal which can be interpreted by the behavioural biometrics recognition software and/or which triggers another stimulus.

12. Piggy bank according to the preceding claim, **characterised in that** it comprises at least one tactile sensor on at least one flank (26) and/or its back (27).

13. Piggy bank according to one of claims 8 to 12, **characterised in that** it further comprises a means of two-way communication with a server of a bank which holds a bank account of the user and/or a mobile application.

14. Piggy bank according to the preceding claim, **characterised in that** the processing means authorises transmission of the information by the communication means only when the level of authentication of the user is sufficient.

15. Piggy bank according to one of claims 13 to 14, **characterised in that** the means of two-way communication allows the reception of orders adapted for updates of the piggy bank.

16. Piggy bank according to the preceding claim, **characterised in that** the updates comprise at least one of the following actions:
- the integration of one or more new challenges,
- the elimination of one or more challenges which do not give the desired results for authentication,
- the addition or unblocking of one or more new functions,
- the modification of one or more levels of authentication necessary for the performance of an action.

17. Piggy bank according to one of claims 8 to 16, **characterised in that** the processing means authorises the execution of an action as a function of the level of authentication of the user and the age of the user.
